Europäisches Patentamt

European Patent Office

Office européen des brevets

(19)

(11) Veröffentlichungsnummer: **0 082 918**

**A1**

(12) # EUROPÄISCHE PATENTANMELDUNG

(21) Anmeldenummer: **82106961.4**

(51) Int. Cl.³: **G 02 B 5/16**

(22) Anmeldetag: **31.07.82**

(30) Priorität: **29.10.81 DE 3142929**

(43) Veröffentlichungstag der Anmeldung:
**06.07.83 Patentblatt 83/27**

(84) Benannte Vertragsstaaten:
**AT CH DE IT LI NL SE**

(71) Anmelder: **AEG - TELEFUNKEN Nachrichtentechnik GmbH**
**Gerberstrasse 33**
**D-7150 Backnang(DE)**

(72) Erfinder: **Klinger, Siegfried, Ing.grad.**
**Heininger Weg 57**
**D-7150 Backnang(DE)**

(72) Erfinder: **Blume, Georg, Dipl.-Ing.**
**Auf dem Hagenbach 60**
**D-7150 Backnang(DE)**

(72) Erfinder: **Zielinski, Hans-Gerd, Dipl.-Ing.**
**Hauptstrasse 76**
**D-7151 Burgstetten(DE)**

(74) Vertreter: **Schickle, Gerhard, Dipl.-Ing. et al,**
**Licentia Patent-Verwaltungs-GmbH Theodor-Stern-Kai 1**
**D-6000 Frankfurt/Main 70(DE)**

(54) **Aus mehreren Lichtleitfasern aufgebautes Nachrichtenkabel.**

(57) Die vorliegende Erfindung betrifft ein aus mehreren Lichtleitfasern (3) aufgebautes Nachrichtenkabel mit einer Prüfader (4). Diese Prüfader (4), sie kann ein elektrischer, optischer Leiter oder ein Leiter aus Halbleitermaterial sein, ist so ausgebildet und im Kabel (1) derart angeordnet, daß sich ihre mechanischen, elektrischen oder optischen Eigenschaften bei Überschreiten einer zu hohen mechanischen Beanspruchung in meßbarer Weise bleibend ändern.

Croydon Printing Company Ltd

Licentia Patent-Verwaltungs-GmbH      Z13 PTL-BK/Sch/ma
Theodor-Stern-Kai 1      BK 81/108
D-6000 Frankfurt 70

**Aus mehreren Lichtleitfasern aufgebautes Nachrichtenkabel**

---

Bei Kabeln besteht, insbesondere nach dem Verlegen, die Aufgabe nachzuprüfen, ob die einzelnen Nachrichtenadern während
des Verlegevorgangs nicht beschädigt wurden. Hierzu hat man
bereits parallel zu den Nachrichtenadern Prüfadern geschaltet,
um deren Isolationswiderstand zu messen (DE-AS 1 690 736).

Es wurden auch bereits Überwachungsleiter in Serie von Kabelleiter geschaltet, die seinerseits einseitig geerdet war, um
so die Unversehrtheit des Kabelleiters zu überprüfen (DE-AS
1 463 456).

Ferner wurden bei Kabeln auch Prüfadern aus leicht schmelzbarem Material benutzt, die in einer nicht schmelzbaren Hülle
angeordnet waren. Bei für das Kabel schädlicher Temperaturüberschreitung schmilzt die Prüfader örtlich, so daß die
Unterbrechung zur Fehleranzeige auswertbar ist (DE-OS 1 566
704).

Bei Nachrichtenkkabeln mit Lichtleitfaser als Adern ist es
ferner bekannt, einen sogenannten Alarmmantel vorzusehen, mit dessen Hilfe aus den Nachrichtenadern unerwünscht austretendes Licht leicht feststellbar ist.

Vorliegende Erfindung hat sich die Aufgabe gestellt, mittels einer geeignet ausgebildeten Prüfader festzustellen, ob das Nachrichtenkabel einer zu hohen mechanischen Beanspruchung unterlag.

Erfindungsgemäß wird dies dadurch gelöst, daß mindestens eine Prüfader derart aufgebaut und im Kabelinnern befestigt ist, daß sich deren Eigenschaften bei zu hoher mechanischer Beanspruchung des Nachrichtenkabels irreversibel meßbar ändert.

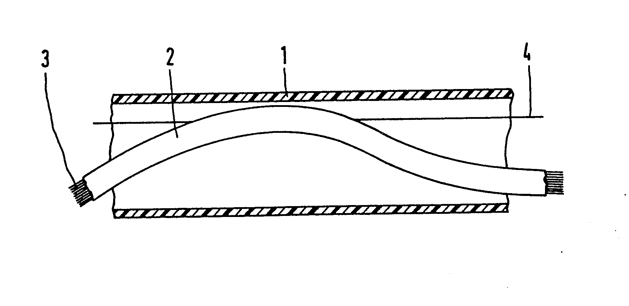

Im folgenden soll anhand eines Ausführungsbeispiels der Erfindungsgedanke und die damit erzielbaren Vorteile noch erläutert werden.
Zwar werden bereits Nachrichtenkabel mit Lichtleitfasern als Adern so aufgebaut, daß das Faserbündel innerhalb eines Schutzmantels so angeordnet ist, daß man die Lichtleitfaser im gewissen Umfang strecken kann. Beispielsweise werden hierfür die Faserbündel sehr lose und mit Überlänge in den sie umgebenden Schutzmantel eingelegt und nur an wenigen Stellen mit dem Schutzmantel verbunden.
In der Figur ist dies schematisch dargestellt. Der Schutzmantel 1 enthält ein Faserbündel 2, welches mit Überlänge im Mantel angeordnet ist. Beim dargestellten Beispiel sind die einzelnen Glasfasern 3 des Bündels in einem Kunststoffschlauch 2. Bei einer Auftrommelung oder Längsreckung des Kabels ist normalerweise ausreichend Faserlänge vorhanden, so daß die einzelnen Lichtleitfasern unbeschädigt bleiben. Trotzdem kann bei normalem Verlege-Aufwand nicht ausgeschlossen werden, daß einzelne Fasern nach der Montage beschädigt sind. Dies bedeutet, daß das ganze Kabel bezüglich jeder einzelnen Ader vor der Inbetriebnahme durchzumessen ist. Diesen erheblichen Arbeitsaufwand vermeidet die Erfindung durch die Benutzung einer geeigneten Prüfader.

Eine Möglichkeit der Ausbildung der Prüfader 4 besteht darin, daß man sie derart ausbildet und/oder im Kabel derart anordnet, daß sie ihre Werte bei Überschreitung der zulässigen Beanspruchung in meßbarer Weise bleibend ändert. Hierzu kann man als Prüfader 4 ausser entsprechend dimensionierten metallischen Leitern auch nichtmetallische leitende Werkstoffe oder Halbleiter verwenden.

Vorzugsweise wird man die Prüfader so ausbilden, daß sie bei Überschreitung der zulässigen Werte des Kabels bricht. Hierfür ist besonders die Verwendung einer Lichtleitfaser geeignet. Diese ist im Gegensatz zu dem der Nachrichtenübertragung dienenden anderen Lichtleitfaser nur mit einer solchen Überlänge im Kabelmantel angeordnet und fixiert, daß sie bereits bricht, wenn die mechanische Beanspruchung des Kabels eine Beschädigung der anderen Lichtleitfaser vermuten läßt. Damit ist man in der Lage, mit Hilfe dieser Prüfader festzustellen, ob das Kabel nach der Montage noch einwandfrei ist, oder ob man mit möglichen Fehlern bei den einzelnen Adern rechnen muß. Man kann davon ausgehen, daß bei intakter Prüfader auch die Nachrichtenadern in einwandfreiem Zustand sind, so daß das übliche Durchmessen jeder Ader entfallen kann. Dies bedeutet eine erhebliche Zeiteinsparung beim Installieren eines Kabels.

Um zu erreichen, daß die Prüfader vor den im Kabel vorhandenen Nachrichtenadern bei vorbestimmter mechanischer Beanspruchung bricht, kann man die Prüfadern aus anderem Glasmaterial herstellen oder mit einem anderen Querschnitt ausbilden, oder auch normale Lichtleitfasern mit geeigneten Sollbruchstellen versehen.

. . . . . . .

- 1 -

Licentia Patent-Verwaltungs-GmbH            Z13 PTL-BK/Sch/ma
Theodor-Stern-Kai 1                         BK 81/108
D-6000 Frankfurt 70


Patentansprüche


1. Aus mehreren Lichtleitfasern aufgebautes Nachrichtenkabel, dadurch gekennzeichnet, daß mindestens eine Prüfader (4) derart aufgebaut und im Kabelinnern gelagert ist, daß sich deren Eigenschaften bei zu hoher mechanischer Beanspruchung des Nachrichtenkabels irreversibel meßbar ändert.


2. Nachrichtenkabel nach Anspruch 1, dadurch gekennzeichnet, daß die Prüfader als optischer Leiter, elektrischer Leiter oder Halbleiter ausgebildet ist.


3. Nachrichtenkabel nach Anspruch 1, dadurch gekennzeichnet, daß die Prüfader bei Überschreitung der für das Kabel zulässigen mechanischen Beanspruchung bricht oder andere Eigenschaften bleibend ändert.


4. Nachrichtenkabel nach Anspruch 1 oder 3, dadurch gekennzeichnet, daß als Prüfader eine Lichtleitfaser (4) dient.


5. Nachrichtenkabel nach Anspruch 4, dadurch gekennzeichnet, daß die Prüfader (4) im Gegensatz zu den Nachrichtenadern (2) mit so wenig Überlänge im Kabel angeordnet ist,

daß sie beim Überschreiten einer vorgegebenen Überbelastung
bricht.

6. Nachrichtenkabel nach Anspruch 4, dadurch gekennzeichnet,
   daß die Prüfader (4) dehnungsempfindlicher ausgebildet
   ist, als die Nachrichtenadern (2).

7. Nachrichtenkabel nach Anspruch 5, dadurch gekennzeichnet,
   daß zwei Lichtleitfasern (4, 5) als Prüfadern dienen,
   die an einem Kabelende optisch miteinander verbunden sind
   (10).

0082918

## Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich der maßgeblichen Teile | Betrifft Anspruch | KLASSIFIKATION DER ANMELDUNG (Int. Cl. ³) |
|---|---|---|---|
| | --- | | G 02 B    5/16 |
| X | DE-A-2 842 077  (SIEMENS AG) <br> * Seite 4, Zeilen 10-15; Seite 5, Zeilen 17-36; Ansprüche 1-5 * | 1-4,6 | |
| | --- | | |
| A | DE-A-2 646 440  (SPINNER-GMBH) <br> * Ansprüche 1, 2 * | 2 | |
| | --- | | |
| A | DE-A-2 114 454  (SIEMENS AG) <br> * Ganzes Dokument * | 7 | |
| | --- | | |
| A | DE-A-2 931 534 <br> (MESSERSCHMITT-BÖLKOW-BLOHM GMBH) <br> * Ganzes Dokument * | | |
| | ----- | | |

| RECHERCHIERTE SACHGEBIETE (Int. Cl. ³) |
|---|
| G 02 B    5/16 <br> H 04 B    9/00 |

Der vorliegende Recherchenbericht wurde für alle Patentansprüche erstellt.

| Recherchenort <br> BERLIN | Abschlußdatum der Recherche <br> 28-02-1983 | Prüfer <br> FUCHS  R |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82